(19) Europäisches Patentamt
European Patent Office
Office européen des brevets

(11) **EP 3 846 583 A1**

(12) **EUROPEAN PATENT APPLICATION**
published in accordance with Art. 153(4) EPC

(43) Date of publication:
**07.07.2021 Bulletin 2021/27**

(51) Int Cl.:
*H05B 3/20* (2006.01)    *B32B 5/04* (2006.01)
*B32B 5/08* (2006.01)

(21) Application number: **19855124.4**

(22) Date of filing: **27.08.2019**

(86) International application number:
**PCT/JP2019/034320**

(87) International publication number:
**WO 2020/045677 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **29.08.2018   JP 2018160470**

(71) Applicant: **LINTEC CORPORATION
Itabashi-ku
Tokyo 173-0001 (JP)**

(72) Inventors:
• **ITO, Masaharu**
  **Tokyo 173-0001 (JP)**
• **MORIOKA, Takashi**
  **Tokyo 173-0001 (JP)**
• **HAGIHARA, Yoshiaki**
  **Tokyo 173-0001 (JP)**

(74) Representative: **Gille Hrabal
Partnerschaftsgesellschaft mbB
Patentanwälte
Brucknerstraße 20
40593 Düsseldorf (DE)**

(54) **SHEET-LIKE CONDUCTIVE MEMBER**

(57) A sheet-shaped conductive member (10) includes a pseudo sheet structure (20) having a plurality of conductive linear bodies (22) arranged to be spaced from each other, in which the sheet-shaped conductive member (10) has stretchability, and a minimum interval between the conductive linear bodies (22) is 50 μm or more.

# FIG.1

EP 3 846 583 A1

**Description**

TECHNICAL FIELD

The present invention relates to a sheet-shaped conductive member.

BACKGROUND ART

A sheet-shaped conductive member (hereinafter also referred to as a "conductive sheet") having a pseudo sheet structure in which a plurality of conductive linear bodies are arranged to be spaced from each other may be applied to components/materials of various articles such as a heat-generating body of a heat-generating device, a material for a heating textile or a display protection film (anti-shatter film).

As an example of a sheet applied to a heat-generating body, Patent Literature 1 describes a planar heat-generating body including: a planar member including an adhesive agent layer on at least one surface thereof; and a foil-shaped resistor having a predetermined wiring pattern and arranged on the adhesive agent layer of the planar member.

Patent Literature 2 describes a heat-generating sheet having a pseudo sheet structure in which a plurality of linear bodies extending in one direction are arranged to be spaced from each other. This heat-generating sheet includes: the pseudo sheet structure whose conductive linear bodies each have a diameter of 7 $\mu$m to 75 $\mu$m; and a resin protective layer disposed on one surface of the pseudo sheet structure. In this heat-generating sheet, a total thickness of layers provided on the surface of the pseudo sheet structure closer to the resin protective layer is 1.5 to 80 times the diameter of each of the conductive linear bodies.

CITATION LIST

PATENT LITERATURE(S)

Patent Literature 1: JP 8-222359 A
Patent Literature 2: International Publication No. WO 2018/097321

SUMMARY OF THE INVENTION

PROBLEM(S) TO BE SOLVED BY THE INVENTION

However, Patent Literature 1 does not describe stretchability of the planar heat-generating body and a distance between wires. Meanwhile, Patent Literature 2 describes that in a plan view of the sheet-shaped conductive member, metal wires are in a waveform and also describes a distance between adjacent ones of the metal wires in a direction orthogonal to the axial direction thereof. However, Patent Literature 2 does not describe that the metal wires in a waveform approach each other to shorten the distance between the metal wires in the direction orthogonal to the axial direction thereof. In other words, in the heat-generating sheet according to Patent Literature 2, abnormal heat generation is likely to be caused under some conditions due to the adjacent ones of the metal wires being too close to each other.

An object of the invention is to provide a sheet-shaped conductive member with sufficient stretchability that can prevent abnormal heat generation or an occurrence of signal crosstalk.

MEANS FOR SOLVING THE PROBLEM(S)

A sheet-shaped conductive member according to an aspect of the invention is a sheet-shaped conductive member including a pseudo sheet structure having a plurality of conductive linear bodies arranged to be spaced from each other, in which the sheet-shaped conductive member has stretchability, and a minimum interval between the conductive linear bodies is 50 $\mu$m or more.

In the sheet-shaped conductive member according to the one aspect of the invention, it is preferable that a percentage of stretching in an axial direction of the conductive linear bodies of the sheet-shaped conductive member is 8% or more.

In the sheet-shaped conductive member according to the one aspect of the invention, it is preferable that the conductive linear bodies are in a waveform in a plan view of the sheet-shaped conductive member.

In the sheet-shaped conductive member according to the one aspect of the invention, it is preferable that the sheet-shaped conductive member satisfies both formulae (F1) and (F2) below,

$$0.15 \leq 2A/\lambda \leq 5.0 \ldots (F1)$$

$$\{(2A - D - L)/(2A - D)\} \leq 0.8 \ldots (F2),$$

where an amplitude of each of the conductive linear bodies, a wavelength of each of the conductive linear bodies, an interval between adjacent ones of the conductive linear bodies in a direction orthogonal to the axial direction and a diameter of each of the conductive linear bodies are defined as A, $\lambda$, L and D, respectively.

In the sheet-shaped conductive member according to the one aspect of the invention, it is preferable that the conductive linear bodies are at least one type of linear bodies selected from the group consisting of linear bodies including a metal wire, linear bodies including carbon nanotubes and linear bodies in a form of conductively coated strings.

In the sheet-shaped conductive member according to the one aspect of the invention, it is preferable that the sheet-shaped conductive member is used as a heat-generating body.

According to the invention, a sheet-shaped conductive member with sufficient stretchability that can prevent abnormal heat generation or an occurrence of signal crosstalk can be provided.

BRIEF DESCRIPTION OF DRAWING(S)

Fig. 1 schematically shows a sheet-shaped conductive member according to a first exemplary embodiment of the invention.
Fig. 2 is a cross-sectional view taken along a II-II line in Fig. 1.
Fig. 3 schematically shows an arrangement of conductive linear bodies according to the first exemplary embodiment of the invention.
Fig. 4 schematically shows another arrangement of the conductive linear bodies according to the first exemplary embodiment of the invention.
Fig. 5 schematically shows a sheet-shaped conductive member according to a second exemplary embodiment of the invention.
Fig. 6 schematically shows a sheet-shaped conductive member according to a third exemplary embodiment of the invention.
Fig. 7 schematically shows a sheet-shaped conductive member according to a fourth exemplary embodiment of the invention.
Fig. 8 is a photograph showing a measurement result of a temperature distribution in a sheet-shaped conductive member obtained in Example 1.
Fig. 9 is a photograph showing a measurement result of a temperature distribution in a sheet-shaped conductive member obtained in Comparative 2.

DESCRIPTION OF EMBODIMENT(S)

First Exemplary Embodiment

Exemplary embodiments of the invention will be described below as examples with reference to the attached drawings. The invention is not limited to the exemplary embodiments. It should be noted that the drawings include parts that are shown by being enlarged or reduced in size to facilitate the explanation.

Sheet-Shaped Conductive Member

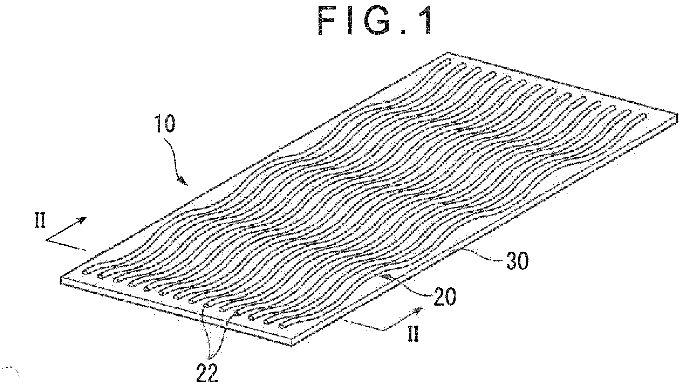

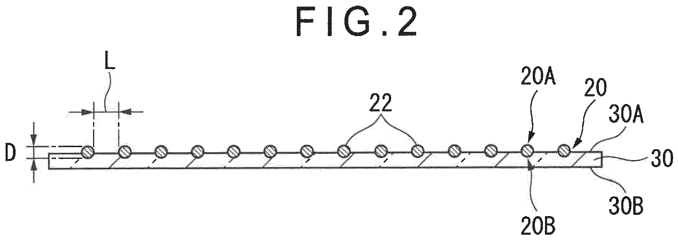

As shown in Figs. 1 and 2, a sheet-shaped conductive member 10 according to the first exemplary embodiment includes, for instance, a pseudo sheet structure 20 and an adhesive agent layer 30. Specifically, for instance, the sheet-shaped conductive member 10 includes the pseudo sheet structure 20 laminated on the adhesive agent layer 30.

It should be noted that in the following, 20A refers to a surface (hereinafter referred to as a "first surface 20A") of the pseudo sheet structure 20 that is opposite to the surface on which the adhesive agent layer 30 is laminated. It should also be noted that 20B refers to the other surface (hereinafter referred to as a "second surface 20B") of the pseudo sheet structure 20, on which the adhesive agent layer 30 is laminated (see Fig. 2). 30A refers to a surface (hereinafter referred to as a "first adhesive surface 30A") of the adhesive agent layer 30 on which the pseudo sheet structure 20 is laminated. 30B refers to the other surface (hereinafter referred to as a "second adhesive surface 30B")

of the adhesive agent layer 30, which is opposite to the surface on which the pseudo sheet structure 20 is laminated (see Fig. 2).

In other words, in the sheet-shaped conductive member 10 according to the first exemplary embodiment, the pseudo sheet structure 20 and the adhesive agent layer 30 are laminated to each other so that the second surface 20B of the pseudo sheet structure 20 faces the first adhesive surface 30A of the adhesive agent layer 30.


Pseudo Sheet Structure


In the pseudo sheet structure 20, a plurality of conductive linear bodies 22 extending in one direction are arranged to be spaced from each other. In a plan view of the sheet-shaped conductive member 10, the conductive linear bodies 22 are in a linear form or waveform. Specifically, the conductive linear bodies 22 may be in, for instance, a sinusoidal, rectangular, triangular or sawtooth waveform. In other words, in the pseudo sheet structure 20, the plurality of conductive linear bodies 22 are aligned at equal intervals in a direction orthogonal to the axial direction of the conductive linear bodies 22.

The pseudo sheet structure 20 with the above arrangement can prevent the conductive linear bodies 22 from being cut when the sheet-shaped conductive member 10 is stretched in the axial direction of the conductive linear bodies 22. It should be noted that the conductive linear bodies 22 are not cut even if the sheet-shaped conductive member 10 is stretched in the direction orthogonal to the axial direction of the conductive linear bodies 22. Accordingly, the sheet-shaped conductive member 10 has sufficient stretchability.

A percentage of stretching of the sheet-shaped conductive member 10 in the axial direction of the conductive linear bodies 22 is preferably 8% or more, more preferably 10% or more, further preferably 50% or more. The percentage of stretching of 8% or more allows the sheet-shaped conductive member 10 to be applied to the curved surface or the like of an adherend.

The percentage of stretching of the sheet-shaped conductive member 10 in the direction orthogonal to the axial direction of the conductive linear bodies 22 is preferably 8% or more, more preferably 10% or more, further preferably 50% or more. The percentage of stretching of 8% or more allows the sheet-shaped conductive member 10 to be applied to the curved surface or the like of an adherend.

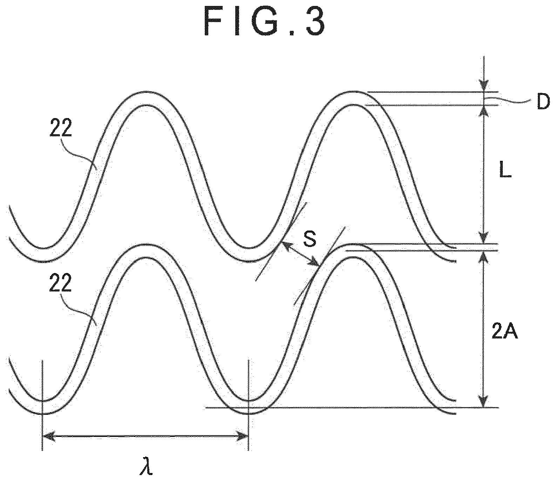

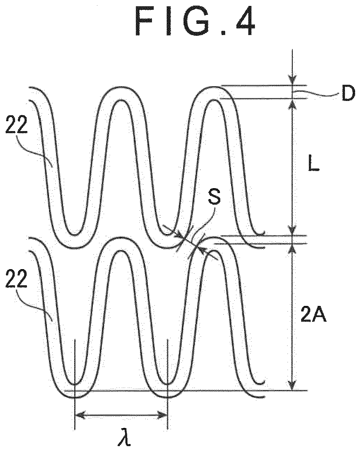

A minimum interval S between the conductive linear bodies 22 is 50 $\mu$m or more (see Figs. 3 and 4). The minimum interval S of less than 50 $\mu$m causes abnormal heat generation or signal crosstalk. Further, in order to increase the density of the conductive linear bodies 22 in the pseudo sheet structure 20, the minimum interval S between the conductive linear bodies 22 is preferably 500 $\mu$m or less.

As shown in Figs. 3 and 4, the minimum interval S between the conductive linear bodies 22 changes depending on the change in a wavelength $\lambda$ of the conductive linear bodies 22. In other words, as the wavelength $\lambda$ of the conductive linear bodies 22 becomes smaller, the minimum interval S between the conductive linear bodies 22 also becomes smaller. Similarly, the minimum interval S between the conductive linear bodies 22 changes depending on the changes in an amplitude A of the conductive linear bodies 22, an interval L between the conductive linear bodies 22 in the direction orthogonal to the axial direction and a diameter D of the conductive linear bodies 22.

A conventional technique specifies only the interval L between the conductive linear bodies 22 in the direction orthogonal to the axial direction thereof. Accordingly, for instance, in a case where the wavelength $\lambda$ of the conductive linear bodies 22 is too small, abnormal heat generation or signal crosstalk may be caused. In contrast, as in the first exemplary embodiment, the minimum interval S between conductive linear bodies 22 of 50 $\mu$m or more can more reliably prevent abnormal heat generation or the occurrence of signal crosstalk.

The minimum interval S between the conductive linear bodies 22 is obtained by observing the conductive linear bodies 22 of the pseudo sheet structure 20 with the use of a digital microscope, and selecting and measuring five or more locations where the interval is narrow. A minimum value among the measurement values is defined as the minimum interval S.

A diameter D of each of the conductive linear bodies 22 is preferably in a range from 0.0001 cm (1 $\mu$m) to 0.0125 cm (125 $\mu$m). Especially when the conductive linear bodies 22 are linear bodies including carbon nanotubes, the diameter D of each of the conductive linear bodies 22 is more preferably in a range from 0.0003 cm (3 $\mu$m) to 0.0100 cm (100 $\mu$m), further preferably in a range from 0.0005 cm (5 $\mu$m) to 0.007 cm (70 $\mu$m), particularly preferably in a range from 0.0005 cm (5 $\mu$m) to 0.004 cm (40 $\mu$m), the most preferably in a range from 0.0005 cm (5 $\mu$m) to 0.002 cm (20 $\mu$m).

Especially when the conductive linear bodies 22 are linear bodies including carbon nanotubes, in the case of the conductive linear bodies 22 each having a diameter in a range from 1 $\mu$m to 125 $\mu$m, the conductive linear bodies 22 are prevented from being cut in manufacturing the sheet-shaped conductive member 10 (pseudo sheet structure 20). Moreover, with the diameter in the above range, it becomes difficult to recognize each of the conductive linear bodies 22 with naked eyes, and thus a light transmittance of the sheet-shaped conductive member 10 (pseudo sheet structure 20) is enhanced. This light transmittance, for instance, makes it easier to recognize an image on the opposite side to the observer (a reflected image in the case of a mirror) through the sheet-shaped conductive member 10. Specifically, for instance, when the sheet-shaped conductive member 10 is attached to a window, it is easy to see a scene on the opposite side of the window. The use of linear bodies having a small diameter makes it almost impossible to recognize the pseudo sheet structure 20 in the sheet-shaped conductive member 10 with naked eyes, thereby allowing the image through the window or mirror to be visually recognized in a more natural manner.

The diameter D of the conductive linear bodies 22 is obtained by observing the conductive linear bodies 22 of the pseudo sheet structure 20 with the use of a digital microscope, measuring diameters of the conductive linear bodies 22 at randomly selected five locations and calculating an average thereof.

An interval L between the conductive linear bodies 22 in the direction orthogonal to the axial direction thereof is preferably in a range from 0.005 cm (50 $\mu$m) to 5.0 cm (50000 $\mu$m), more preferably in a range from 0.008 cm (80 $\mu$m) to 4.0 cm (40000 $\mu$m). When the interval L between the conductive linear bodies 22 in the direction orthogonal to the axial direction thereof is in a range from 0.005 cm (50 $\mu$m) to 5.0 cm (50000 $\mu$m), the light transmittance is easily improved while reducing a resistance value of the pseudo sheet structure 20.

The interval L between the conductive linear bodies 22 in the direction orthogonal to the axial direction thereof is obtained by observing the conductive linear bodies 22 of the pseudo sheet structure 20 with the use of a digital microscope and measuring the interval between two adjacent ones of the conductive linear bodies 22.

It should be noted that the interval between the two adjacent ones of the conductive linear bodies 22 in the direction orthogonal to the axial direction thereof is a length measured along a direction in which the conductive linear bodies 22 are aligned and between facing portions of the two adjacent ones of the conductive linear bodies 22 (see Fig. 2). When the conductive linear bodies 22 are aligned at unequal intervals, the interval L is an average of all intervals between adjacent ones of the conductive linear bodies 22. To facilitate the controlling of a value of the interval L and ensure a uniformity of light transmittance, it is preferable that the conductive linear bodies 22 are aligned at substantially equal intervals in the pseudo sheet structure 20.

An amplitude A of each of the conductive linear bodies 22 is preferably in a range from 0.005 cm (50 $\mu$m) to 5.0 cm (50000 $\mu$m), more preferably in a range from 0.008 cm (80 $\mu$m) to 4.0 cm (40000 $\mu$m). When the amplitude A of each of the conductive linear bodies 22 is in range from 0.005 cm (50 $\mu$m) to 5.0 cm (50000 $\mu$m), the stretchability of the sheet-shaped conductive member 10 can be improved while ensuring the minimum interval S between the conductive linear bodies 22.

The amplitude A of each of the conductive linear bodies 22 is obtained by observing the conductive linear bodies 22 of the pseudo sheet structure 20 with the use of a digital microscope, measuring amplitudes of the conductive linear bodies 22 at randomly selected five locations and calculating an average thereof.

A wavelength $\lambda$ of each of the conductive linear bodies 22 is preferably in a range from 0.005 cm (50 $\mu$m) to 20.0 cm (200000 $\mu$m), more preferably in a range from 0.008 cm (80 $\mu$m) to 20.0 cm (200000 $\mu$m). When the wavelength $\lambda$ of each of the conductive linear bodies 22 is in range from 0.005 cm (50 $\mu$m) to 20.0 cm (200000 $\mu$m), the stretchability of the sheet-shaped conductive member 10 can be improved while ensuring the minimum interval S between the conductive linear bodies 22.

The wavelength $\lambda$ of each of the conductive linear bodies 22 is obtained by observing the conductive linear bodies 22 of the pseudo sheet structure 20 with the use of a digital microscope, measuring wavelengths of the conductive linear bodies 22 at randomly selected five locations and calculating an average thereof.

In the first exemplary embodiment, the amplitude A of each of the conductive linear bodies 22, the wavelength $\lambda$ of each of the conductive linear bodies 22, the interval L between the conductive linear bodies 22 in the direction orthogonal to the axial direction thereof and the diameter D of the conductive linear bodies 22 preferably satisfy both formulae (F1) and (F2) below.

$$0.15 \leq 2A/\lambda \leq 5.0 \ldots (F1)$$

$$\{(2A - D - L)/(2A - D)\} \leq 0.8 \ldots (F2)$$

When the value of 2A/$\lambda$ is 0.15 or more, the stretchability of the sheet-shaped conductive member 10 can be improved. When the value of 2A/$\lambda$ is 5.0 or more, the wavelength $\lambda$ is not excessively small relative to the amplitude A of each of the conductive linear bodies 22.

When the value of {(2A-D-L)/(2A-D)} is 0.8 or less, the interval L in the direction orthogonal to the axial direction is not excessively small relative to the amplitude A of each of the conductive linear bodies 22, thereby ensuring the minimum interval S between the conductive linear bodies 22.

For instance, when the sheet-shaped conductive member 10 is used as a heat-generating body, a volume resistivity R of each of the conductive linear bodies 22 is preferably in a range from $1.0 \times 10^{-7}$ $\Omega$cm to $1.0 \times 10^{-1}$ $\Omega$cm, more preferably in a range from $1.0 \times 10^{-6}$ $\Omega$cm to $1.0 \times 10^{-1}$ $\Omega$cm, further preferably in a range from $1.0 \times 10^{-6}$ $\Omega$cm to

1.0×10$^{-2}$ Ωcm, particularly preferably in a range from 1.0×10$^{-6}$ Ωcm to 4.0×10$^{-5}$ Ωcm. When the volume resistivity R of each of the conductive linear bodies 22 are in the above ranges, the resistance value of the pseudo sheet structure 20 is likely to be reduced.

A measurement method of the volume resistivity R of each of the conductive linear bodies 22 is as follows. First, in accordance with the above-described method, the diameter D of each of the conductive linear bodies 22 is obtained. Next, a silver paste is applied to two locations on the conductive linear body 22 at 40 mm intervals to be defined as measurement portions. The resistance between the measurement portions is then measured to obtain a resistance value of the conductive linear bodies 22 having a length of 40 mm. Assuming pillar-shaped conductive linear bodies 22 having the diameter D, the cross-sectional area of each of the conductive linear bodies 22 is calculated. The resistance value obtained above is multiplied by the cross-sectional area and further divided by the measured length of 40 mm to calculate a volume resistivity R of each of the conductive linear bodies 22.

The conductive linear bodies 22 may be linear bodies including metal wires (hereinafter also referred to as "metal wire linear bodies"), but are not particularly limited thereto. Since the metal wires have a high thermal conductivity, a high electrical conductivity, an excellent handleability, and applicability, the application of the metal wire linear bodies as the conductive linear bodies 22 facilitates to improve the light transmittance while reducing the resistance value of the pseudo sheet structure 20. The application of the sheet-shaped conductive member 10 (pseudo sheet structure 20) as the heat-generating body facilitates achieving prompt heat generation. As described above, linear bodies each having a small diameter are likely to be obtained.

Examples of the conductive linear bodes 22 include linear bodies including carbon nanotubes and linear bodies in a form of conductively coated strings, in addition to the metal wire linear bodies.

Carbon nanotube linear bodies are obtained by drawing carbon nanotubes from an end of a carbon nanotube forest (a grown form of a plurality of carbon nanotubes grown on a substrate so that the carbon nanotubes are oriented in a vertical direction with respect to the substrate, which is sometimes referred to as an "array") to form sheets, bundling the drawn carbon nanotube sheets and then spinning the bundle of the carbon nanotubes. In this manufacturing method, ribbon-shaped carbon nanotube linear bodies are obtained when the carbon nanotubes are not twisted in the spinning process, and string-shaped linear bodies are obtained when the carbon nanotubes are twisted in the process. The ribbon-shaped carbon nanotube linear bodies are linear bodies having carbon nanotubes that are not twisted. In addition, carbon nanotube linear bodies can also be obtained by a method such as spinning carbon nanotubes from a dispersion liquid of the carbon nanotubes. The carbon nanotube linear bodies can be manufactured by the spinning method disclosed in, for instance, US 2013/0251619 A (JP 2012-126635 A). In order to obtain a uniform diameter of the carbon nanotube linear bodies, it is preferable to use the string-shaped carbon nanotube linear bodies. In order to obtain high-purity carbon nanotube linear bodies, it is preferable to obtain the string-shaped carbon nanotube linear bodies by spinning the carbon nanotube sheet. The carbon nanotube linear bodies may be linear bodies in which two or more carbon nanotube linear bodies are woven to each other. The carbon nanotube linear bodies also may be linear bodies including carbon nanotubes in combination with another conductive material (hereinafter also referred to as "composite linear bodies").

Examples of the composite linear bodies include: (1) a composite linear body obtained by depositing an elemental metal or metal alloy on a surface of a forest, sheets or a bundle of carbon nanotubes, or a spun linear body through a method such as vapor deposition, ion plating, sputtering or wet plating in the process of manufacturing a carbon nanotube linear body obtained by drawing carbon nanotubes from an end of the carbon nanotube forest to form the sheets, bundling the drawn carbon nanotube sheets and then spinning the bundle of the carbon nanotubes; (2) a composite linear body in which a bundle of carbon nanotubes is spun with a linear body or composite linear body of an elemental metal or metal alloy; and (3) a composite linear body in which a carbon nanotube linear body or a composite linear body are woven with a linear body or composite linear body of an elemental metal or metal alloy. It should be noted that for the composite linear body described in (2) above, a metal may be deposited on carbon nanotubes in a similar manner to the composite linear body described in (1) above. For the composite linear body described in (3) above, which is a composite linear body in which two linear bodies are woven, three or more of carbon nanotube linear bodies, or linear bodies or composite linear bodies of an elemental metal or metal alloy may be woven to each other as long as at least one of linear bodies or composite linear bodies of an elemental metal or metal alloy is included therein.

Examples of the metal used in the composite linear bodies include elemental metals such as gold, silver, copper, iron, aluminum, nickel, chrome, tin and zinc, or alloys containing at least one of these elemental metals (e.g., a copper-nickel-phosphorus alloy and copper-iron-phosphorus-zinc alloy). These may be used alone or in combination of two or more.

The conductive linear bodies 22 may be linear bodies in a form of conductively coated strings. Examples of the strings include a string spun from a resin such as a nylon resin or polyester resin. Examples of the conductive coating include a metal coating, a conductive polymer coating and a carbon material coating. The conductive coating can be formed by plating, vapor deposition or the like. The linear bodies in a form of conductively coated strings can improve conductivity of the linear bodies while maintaining the flexibility of the strings. In other words, it becomes easier to reduce the resistance of the pseudo sheet structure 20.

Each of the conductive linear bodies 22 may be a linear body including a metal wire. The linear body including a metal wire may be a linear body consisting of a single metal wire or a linear body obtained by spinning a plurality of metal wires.

Examples of the metal wire include a wire containing metal such as copper, aluminum, tungsten, iron, molybdenum, nickel, titanium, silver or gold, or an alloy containing two or more metals (e.g., steel such as stainless steel or carbon steel, brass, phosphor bronze, a zirconium-copper alloy, beryllium copper, iron nickel, Nichrome, nickel titanium, Kanthal, Hastelloy or rhenium-tungsten). The metal wire may be plated with tin, zinc, silver, nickel, chrome, a nickel chrome alloy, solder or the like. The surface of the metal wire may be coated with a later-described carbon material or a polymer. In particular, a wire containing one or more metals selected from tungsten, molybdenum and an alloy thereof is preferable to allow the conductive linear bodies 22 to have a low volume resistivity.

Examples of the metal wire include a metal wire coated with the carbon material. Coating of the metal wire with the carbon material reduces a metallic luster, thereby facilitating the metal wire to be less visible. Coating the metal wire with the carbon material also prevents metal corrosion.

Examples of the carbon material with which the metal wire is coated include an amorphous carbon (e.g., carbon black, activated carbon, hard carbon, soft carbon, mesoporous carbon and a carbon fiber), graphite, fullerene, graphene and carbon nanotubes.

Adhesive Agent Layer

The adhesive agent layer 30 is a layer containing an adhesive agent. In the sheet-shaped conductive member 10 including the adhesive agent layer 30 laminated on the second surface 20B of the pseudo sheet structure 20, the adhesive agent layer 30 facilitates the sheet-shaped conductive member 10 to be stuck to an adherend. It should be noted that the adhesive agent layer 30 is a layer provided as required. The sheet-shaped conductive member 10 can be bonded to the adherend while the first surface 20A faces the adherend. In this case, as described above, the first adhesive surface 30A of the adhesive agent layer 30 exposed from the pseudo sheet structure 20 in the sheet-shaped conductive member 10 facilitates the sheet-shaped conductive member 10 to be bonded to the adherend. The sheet-shaped conductive member 10 may be bonded to the adherend while the second adhesive surface 30B faces the adherend.

The adhesive agent layer 30 is preferably curable. Curing of the adhesive agent layer provides the adhesive agent layer 30 with hardness sufficient to protect the pseudo sheet structure 20, so that the adhesive agent layer 30 also functions as a protection film. The cured adhesive agent layer 30 has an improved impact resistance, which also can prevent shock-induced deformation of the cured adhesive agent layer 30.

The adhesive agent layer 30 is preferably an energy-ray-curable layer that is curable by irradiation with an energy ray such as ultraviolet ray, visible energy ray, infrared ray or electron beam in order to be easily cured in a short time. It should be noted that examples of "energy-ray curing" include thermal curing (i.e., curing by heating with an energy ray).

Conditions for energy-ray curing depend on the type of the used energy ray. For instance, when the adhesive agent layer 30 is cured by irradiation with ultraviolet ray, it is preferable that an irradiation amount of the ultraviolet ray is in a range from 10 mJ/cm$^2$ to 3,000 mJ/cm$^2$ and an irradiation time is in a range from 1 second to 180 seconds.

Examples of the adhesive agent in the adhesive agent layer 30 include a so-called heat-seal type adhesive agent to be bonded by heat, and an adhesive agent to exhibit a wet adhesion property. For ease of application, the adhesive agent layer 30 is preferably an sticky agent layer including a sticky agent (pressure-sensitive adhesive agent). The sticky agent in the sticky agent layer is not particularly limited. Examples of the sticky agent include an acrylic sticky agent, urethane sticky agent, rubber sticky agent, polyester sticky agent, silicone sticky agent and polyvinylether sticky agent. Among the above, the sticky agent is preferably at least one selected from the group consisting of an acrylic sticky agent, urethane sticky agent and rubber sticky agent, and more preferably an acrylic sticky agent.

Examples of the acrylic sticky agent include a polymer having a constituent unit derived from alkyl(meth)acrylate containing a straight or branched alkyl group (i.e., a polymer obtained by polymerizing at least alkyl(meth)acrylate) and an acrylic polymer having a constituent unit derived from (meth)acrylate with a cyclic structure (i.e., a polymer obtained by polymerizing at least (meth)acrylate with a cyclic structure). It should be noted that "(meth)acrylate" herein refers to "acrylate" and "methacrylate" and the same applies to the other similar terms.

When the acrylic polymer is a copolymer, the type of the copolymer is not particularly limited. The acrylic copolymer may be a block copolymer, a random copolymer or a graft copolymer.

Among the above, an acrylic copolymer having a constituent unit (a1) derived from an alkyl(meth)acrylate containing a chain alkyl group having 1 to 20 carbon atoms (a1') (hereinafter also referred to as a "monomer component (a1')") and a constituent unit (a2) derived from a functional-group-containing monomer (a2') (hereinafter also referred to as a "monomer component (a2')") is preferable as the acrylic sticky agent.

It should be noted that the acrylic copolymer may further have a constituent unit (a3) derived from another monomer component (a3') different from the monomer component (a1') and the monomer component (a2').

The chain alkyl group in the monomer component (a1') preferably has 1 to 12 carbon atoms, more preferably has 4 to 8 carbon atoms, further preferably has 4 to 6 carbon atoms in terms of enhancement of the adhesion property. Examples of the monomer component (a1') include methyl(meth)acrylate, ethyl(meth)acrylate, propyl(meth)acrylate, n-butyl(meth)acrylate, 2-ethylhexyl(meth)acrylate, lauryl(meth)acrylate, tridecyl(meth)acrylate and stearyl(meth)acrylate. Among the above examples of the monomer component (a1'), butyl(meth)acrylate and 2-ethylhexyl(meth)acrylate are preferable, and butyl(meth)acrylate is more preferable.

The content of the constituent unit (a1) relative to the total constituent units (100 mass%) of the acrylic copolymer is preferably in a range from 50 mass% to 99.5 mass%, more preferably in a range from 55 mass% to 99 mass%, further preferably in a range from 60 mass% to 97 mass%, particularly preferably in a range from 65 mass% to 95 mass%.

Examples of the monomer component (a2') include a hydroxy-group-containing monomer, carboxy-group-containing monomer, epoxy-group-containing monomer, amino-group-containing monomer, cyano-group-containing monomer, keto-group-containing monomer and alkoxysilyl-group-containing monomer. Among the above examples of the monomer component (a2'), a hydroxy-group-containing monomer and carboxy-group-containing monomer are preferable.

Examples of the hydroxy-group-containing monomer include 2-hydroxyethyl(meth)acrylate, 2-hydroxylpropyl(meth)acrylate, 2-hydroxybutyl(meth)acrylate, 3-hydroxybutyl(meth)acrylate and 4-hydroxybutyl(meth)acrylate, among which 2-hydroxyethyl(meth)acrylate is preferable.

Examples of the carboxy-group-containing monomer include a (meth)acrylic acid, maleic acid, fumaric acid and itaconic acid, among which a (meth)acrylic acid is preferable.

Examples of the epoxy-group-containing monomer include glycidyl(meth)acrylate.

Examples of the amino-group-containing monomer include diaminoethyl(meth)acrylate.

Examples of the cyano-group-containing monomer include acrylonitrile.

The content of the constituent unit (a2) relative to the total constituent units (100 mass%) of the acrylic copolymer is preferably in a range from 0.1 mass% to 50 mass%, more preferably in a range from 0.5 mass% to 40 mass%, further preferably in a range from 1.0 mass% to 30 mass%, particularly preferably in a range from 1.5 mass% to 20 mass%.

Examples of the monomer component (a3') include (meth)acrylate having a cyclic structure (e.g., cyclohexyl(meth)acrylate, benzyl(meth)acrylate, isobornyl(meth)acrylate, dicyclopentanyl(meth)acrylate, dicyclopentenyl(meth)acrylate, dicyclopentenyloxyethyl(meth)acrylate, imide(meth)acrylate and acryloylmorpholine), vinyl acetate, and styrene.

The content of the constituent unit (a3) relative to the total constituent units (100 mass%) of the acrylic copolymer is preferably in a range from 0 mass% to 40 mass%, more preferably in a range from 0 mass% to 30 mass%, further preferably in a range from 0 mass% to 25 mass%, particularly preferably in a range from 0 mass% to 20 mass%.

It should be noted that one of the above monomer components (a1') may be used alone or two or more thereof may be used in combination, one of the above monomer components (a2') may be used alone or two or more thereof may be used in combination, and one of the above monomer components (a3') may be used alone or two or more thereof may be used in combination.

The acrylic copolymer may be cross-linked with a cross-linker. Examples of the cross-linker include a known epoxy cross-linker, isocyanate cross-linker, aziridine cross-linker and metal chelate cross-linker. In order to cross-link the acrylic copolymer, the functional group derived from the monomer component (a2') may be used as a cross-linking point where the acrylic copolymer is reacted with the cross-linker.

The sticky agent layer may contain an energy-ray-curable component in addition to the above sticky agent.

When the energy ray is, for instance, an ultraviolet ray, the energy-ray-curable component may be a compound having two or more ultraviolet-polymerizable functional groups in a molecule. Examples of such a compound include trimethylolpropane tri(meth)acrylate, ethoxylated isocyanuric acid tri(meth)acrylate, ditrimethylolpropane tetra(meth)acrylate, tetramethylolmethane tetra(meth)acrylate, pentaerythritol tri(meth)acrylate, dipentaerythritol monohydroxy penta(meth)acrylate, dipentaerythritol hexa(meth)acrylate, caprolactone-modified dipentaerythritol hexa(meth)acrylate, 1,4-butylene glycol di(meth)acrylate, 1,6-hexanediol di(meth)acrylate, dicyclopentadiene dimethoxy di(meth)acrylate, polyethylene glycol di(meth)acrylate, oligoester(meth)acrylate, urethane(meth)acrylate oligomer, epoxy-modified (meth)acrylate, and polyether(meth)acrylate.

One of the energy-ray-curable components may be used alone or a mixture of two or more thereof may be used.

When the acrylic sticky agent is used as the sticky agent, a compound having: in a molecule, a functional group reactive with a functional group derived from the monomer component (a2') in the acrylic copolymer; and an energy-ray-polymerizable functional group may be used as the energy-ray-curable component. The functional group of the compound is reacted with the functional group derived from the monomer component (a2') in the acrylic copolymer, so that a side chain of the acrylic copolymer becomes polymerizable by irradiation with an energy ray. Even in the sticky agent other than the acrylic sticky agent, a component having an energy-ray-polymerizable side chain may be used as the copolymer component other than the copolymer that serves as the sticky agent.

When the sticky agent layer is an energy-ray-curable layer, the sticky agent layer may contain a photopolymerization initiator. The photopolymerization initiator can increase the speed of curing the sticky agent layer by irradiation with an energy ray. Examples of the photopolymerization initiator include benzophenone, acetophenone, benzoin, benzoinmethylether, benzoinethylether, benzoinisopropylether, benzoinisobutylether, benzoin benzoic acid, benzoin methyl benzoate, benzoin dimethylketal, 2,4-diethyl thioxanthone, 1-hydroxy cyclohexylphenylketone, benzyl diphenyl sulfide, tetramethylthiuram monosulfide, azobisisobutyronitrile, benzyl, dibenzyl, diacetyl, 2-chloroanthraquinone, 2,4,6-trimethylbenzoyl diphenylphosphine oxide, 2-benzothiazole-N,N-diethyl dithiocarbamate, and oligo{2-hydroxy-2-methyl-1-[4-(1-propenyl)phenyl]propanone}.

One of the photopolymerization initiators may be used alone or a mixture of two or more thereof may be used.

The sticky agent layer may contain an inorganic filler. When the sticky agent layer contains an inorganic filler, the hardness of the cured sticky agent layer can be further increased. In addition, the heat conductivity of the sticky agent layer is also increased. Further, when the adherend consists mainly of glass, a linear expansion coefficient of the sheet-shaped conductive member 10 is approximated to that of the adherend, which results in an increased reliability of a device obtained by attaching and curing, as required, the sheet-shaped conductive member 10 on the adherend.

Examples of the inorganic filler include an inorganic powder (e.g., silica powder, alumina powder, talc powder, calcium carbonate powder, titanium white powder, colcothar powder, silicon carbide powder and boron nitride powder), spherical beads made from any of the above inorganic powder, a single crystal fiber, and glass fiber. Among the above, a silica filler and an alumina filler are preferable as the inorganic filler. One of the inorganic fillers may be used alone or two or more thereof may be used in combination.

The inorganic filler is preferably subjected to surface modification (coupling) using a compound having a curable functional group.

Examples of the curable functional group include a hydroxyl group, a carboxyl group, an amino group, a glycidyl group, an epoxy group, an ether group, an ester group, and a group having an ethylenically unsaturated bond. Examples of a compound having the above curable functional group(s) include a silane coupling agent.

In order to sustain the rupture resistance of the cured sticky agent layer (the strength of the cured sticky agent layer), the inorganic filler is more preferably surface-modified by a compound containing an energy-ray-curable functional group such as a group having an ethylenically unsaturated bond. Examples of the ethylenically unsaturated bond include a vinyl group, a (meth)acryloyl group and a maleimide group, among which a (meth)acryloyl group is preferable in terms of versatility and high reactivity.

The inorganic filler surface-modified by the compound having the energy-ray-curable functional group, for instance, strengthens an sticky agent layer obtained by attaching and curing the sheet-shaped conductive member 10 on the adherend (e.g., glass). Rupture of the cured sticky agent layer can thus be easily prevented even when the sheet-shaped conductive member 10 is provided on a window, a mirror or the like and a suction cup attached on the sheet-shaped conductive member 10 is removed therefrom.

It should be noted that when the sticky agent layer contains the surface-modified inorganic filler, the sticky agent layer preferably further contains another energy-ray-curable component.

The average particle diameter of the inorganic filler is preferably 1 $\mu$m or less, more preferably 0.5 $\mu$m or less. When the average particle diameter of the inorganic filler is in the above range, the light transmittance of the sheet-shaped conductive member 10 (i.e., the sticky agent layer) can be easily increased and the haze of the sheet-shaped conductive member 10 (i.e., the sticky agent layer) can be reduced. The lower limit of the average particle diameter of the inorganic filler is not particularly limited but preferably 5 nm or more.

It should be noted that the average particle diameter of the inorganic filler is obtained by observing 20 inorganic fillers with the use of a digital microscope, measuring a maximum diameter and minimum diameter of each of the 20 inorganic fillers, from which an average diameter is calculated for each of the 20 inorganic fillers and defined as a diameter thereof, and calculating an average of the diameters of the 20 inorganic fillers.

The content of the inorganic filler in the entire sticky agent layer is preferably in a range from 0 mass% to 95 mass%, more preferably in a range from 5 mass% to 90 mass%, further preferably in a range from 10 mass% to 80 mass%.

The pencil hardness of the cured sticky agent layer is preferably HB or greater, more preferably F or greater, further preferably H or greater. The performance of the cured sticky agent layer for protecting the pseudo sheet structure 20 can thus be improved to further sufficiently protect the pseudo sheet structure 20. Further, even when the sticky agent layer is remote from the adherend relative to the pseudo sheet structure 20 and a support (a base 32 described later) is not provided to the surface of the sticky agent layer (the second adhesive surface 30B) opposite to the surface adjacent to the pseudo sheet structure 20 (the first adhesive surface 30A), the cured sticky agent layer itself is easily prevented from being damaged after the sheet-shaped conductive member 10 is attached on the adherend. It should be noted that pencil hardness is a value measured according to JIS K 5600-5-4.

The sticky agent layer may contain additional component(s). Examples of the additional component(s) include known additives such as organic solvent, flame retardant, tackifier, ultraviolet absorber, antioxidant, preservative, antifungal agent, plasticizer, antifoaming agent and wettability modifier.

A thickness of the adhesive agent layer 30 is appropriately determined depending on the intended use of the sheet-shaped conductive member 10. For instance, in terms of adhesiveness, the thickness of the adhesive agent layer 30 is preferably in a range from 3 $\mu$m to 150 $\mu$m, more preferably in a range from 5 $\mu$m to 100 $\mu$m.

Manufacturing Method of Sheet-Shaped Conductive Member

A manufacturing method of the sheet-shaped conductive member 10 according to the first exemplary embodiment is not particularly limited. For instance, the sheet-shaped conductive member 10 is manufactured through the following steps.

A composition for forming the adhesive agent layer 30 is first applied on a release sheet to form a coating film. The coating film is then dried to produce the adhesive agent layer 30. Next, the conductive linear bodies 22 are arranged to be aligned on the first adhesive surface 30A of the adhesive agent layer 30 to form the pseudo sheet structure 20. For instance, in a state where the adhesive agent layer 30 with the release sheet is arranged on an outer circumferential surface of a drum member, the conductive linear bodies 22 are spirally wound on the first adhesive surface 30A of the adhesive agent layer 30 while rotating the drum member. The bundle of the conductive linear bodies 22 wound in a spiral shape is then cut along the axial direction of the drum member. The pseudo sheet structure 20 is thus formed and arranged on the first adhesive surface 30A of the adhesive agent layer 30. The adhesive agent layer 30 with the release sheet, on which the pseudo sheet structure 20 is formed, is then taken from the drum member. Subsequent to these steps, the release sheet is peeled from the adhesive agent layer 30 to obtain the sheet-shaped conductive member 10. According to this method, for instance, the interval L between adjacent ones of the conductive linear bodies 22 in the pseudo sheet structure 20 is easily adjusted by moving a feed section of the conductive linear bodies 22 along the direction parallel to an axial direction of the drum member while rotating the drum member.

It should be noted that the sheet-shaped conductive member 10 may be produced by forming the pseudo sheet structure 20 in which the conductive linear bodies 22 are aligned and subsequently attaching the second surface 20B of the obtained pseudo sheet structure 20 on the first adhesive surface 30A of the adhesive agent layer 30.

Properties of Sheet-Shaped Conductive Member

A light transmissivity of the sheet-shaped conductive member 10 according to the first exemplary embodiment is preferably 70% or more, more preferably in a range from 70% to 100%, further preferably in a range from 80% to 100%. The sheet-shaped conductive member 10 may be attached on an adherend such as a window of a vehicle or the like, the window being required to allow for the visibility of other vehicles, pedestrians, traffic signals, traffic signs, traffic conditions and the like. When the sheet-shaped conductive member 10 is attached on a mirror as the adherend, sharpness of an image is required. Therefore, as long as the light transmissivity of the sheet-shaped conductive member 10 is 70% or more, the visibility and the sharpness of the image can be easily achieved.

It should be noted that the light transmissivity of the sheet-shaped conductive member 10 (pseudo sheet structure 20) is obtained by measuring a light transmissivity thereof in a visible range (from 380 nm to 760 nm) with the use of a light transmittance meter and calculating an average thereof.

Method of Using Sheet

The sheet-shaped conductive member 10 according to the first exemplary embodiment is used, for instance, by being attached on the adherend. When the adhesive agent layer 30 is curable, the adhesive agent layer 30 is cured after the sheet-shaped conductive member 10 is attached on the adherend. When the sheet-shaped conductive member 10 is attached on the adherend, the pseudo sheet structure 20 of the sheet-shaped conductive member 10 may be attached on the adherend (i.e., the sheet-shaped conductive member 10 may be attached on the adherend with the pseudo sheet structure 20 being interposed between the first adhesive surface 30A of the adhesive agent layer 30 and the adherend), or the second adhesive surface 30B of the sheet-shaped conductive member 10 may be attached on the adherend.

Examples of the adherend include a molding body, nonwoven fabric and woven fabric. The material of the molding body is not particularly limited as long as the surface of the molding body is coated with an electrically non-conductive substance. Examples of the material of the adherend include plastic, ceramic and metal.

It should be noted that when the base 32 (described later) is not present on the first adhesive surface 30A of the adhesive agent layer 30, the pseudo sheet structure 20 of the sheet-shaped conductive member 10 is preferably attached on the adherend. This is because the pseudo sheet structure 20 can be sufficiently protected by a combination of the adherend and the adhesive agent layer 30. The impact resistance of the sheet-shaped conductive member 10 is thus improved, so that the sheet-shaped conductive member 10 should be suitable for a practical use. Further, when the sheet-shaped conductive member 10 (pseudo sheet structure 20) is applied to a heat-generating body, the adhesive agent layer 30 contributes to preventing electric shock when heat is generated (current is applied).

Second Exemplary Embodiment

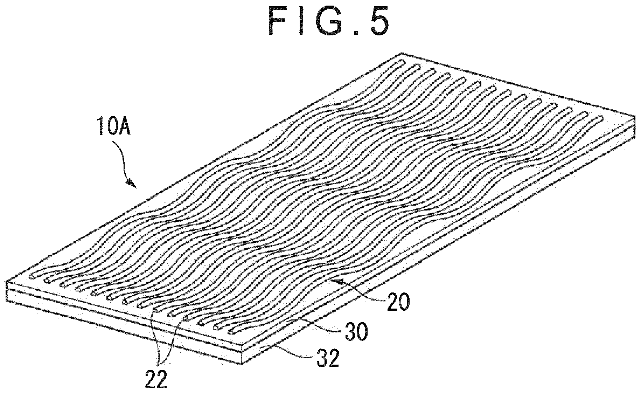

Next, a second exemplary embodiment of the invention will be described with reference to the attached drawings.
The structure similar to that of the first exemplary embodiment is used in the second exemplary embodiment except that a sheet-shaped conductive member 10A is used in place of the sheet-shaped conductive member 10, and thus only the sheet-shaped conductive member 10A will be described below while the description regarding the other components will be omitted.
As shown in Fig. 5, the sheet-shaped conductive member 10A according to the second exemplary embodiment includes the base 32 laminated on the second adhesive surface 30B of the adhesive agent layer 30.
Examples of the base 32 include paper, a thermoplastic resin film, a cured product film for which a curable resin is used, a metal foil, nonwoven fabric, woven fabric and a glass film. Examples of the thermoplastic resin film include resin films such as a polyester resin film, polycarbonate resin film, polyimide resin film, polyolefin resin film, polyurethane resin film and acrylic resin film. The base 32 is preferably stretchable.. The base 32 is more preferably a resin film, nonwoven fabric or woven fabric that is stretchable.
A surface of the base 32 that does not face the adhesive agent layer 30 (the surface exposed from the sheet-shaped conductive member 10A) may be hard-coated using an ultraviolet curable resin or the like in order to reinforce protectiveness of the sheet-shaped conductive member 10A (pseudo sheet structure 20).

Third Exemplary Embodiment

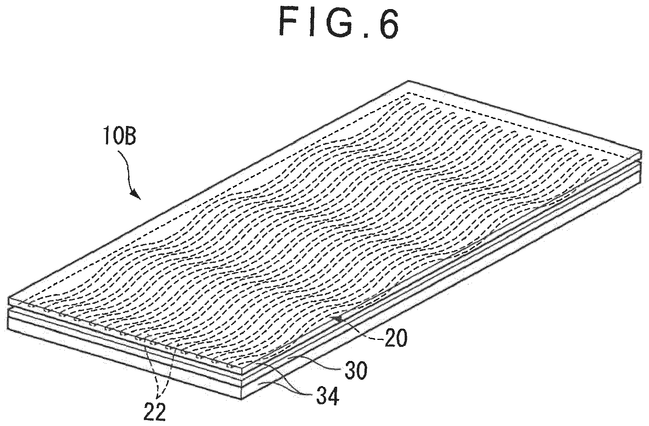

Next, a third exemplary embodiment of the invention will be described with reference to the attached drawings.
The structure similar to that of the first exemplary embodiment is used in the third exemplary embodiment except that a sheet-shaped conductive member 10B is used in place of the sheet-shaped conductive member 10, and thus only the sheet-shaped conductive member 10B will be described below while the description regarding the other components will be omitted.
The sheet-shaped conductive member 10B according to the third exemplary embodiment includes a release layer 34 laminated on, for instance, at least one of the first surface 20A of the pseudo sheet structure 20 and the second adhesive surface 30B of the adhesive agent layer 30.
It should be noted that Fig. 6 shows the sheet-shaped conductive member 10B including the release layer 34 laminated on both the first surface 20A of the pseudo sheet structure 20 and the release layer 34 laminated on the second adhesive surface 30B of the adhesive agent layer 30.
The release layer 34 is not particularly limited. For instance, in terms of easy handling, the release layer 34 preferably includes a release base and a release agent layer formed by applying a release agent on the release base. The release layer 34 may include a release agent layer on only one of the surfaces of the release base, or may include respective release agent layers on both of the surfaces of the release base.
Examples of the release base include a paper base, a laminate paper including a thermoplastic resin (e.g., polyethylene) laminated on the paper base, and a plastic film. Examples of the paper base include glassine paper, coated paper and cast-coated paper. Examples of the plastic film include a polyester film (e.g., a polyethylene terephthalate film, polybutylene terephthalate film and polyethylene naphthalate film) and a polyolefin film (e.g., a polypropylene film and polyethylene film). Examples of the release agent include an olefin rein, a rubber elastomer (e.g., a butadiene resin and isoprene resin), long-chain alkyl resin, alkyd resin, fluorine resin and silicone resin.
The thickness of the release layer 34 is not particularly limited. The thickness of the release layer 34 is preferably in a range from 20 $\mu$m to 200 $\mu$m, more preferably in a range from 25 $\mu$m to 150 $\mu$m.
The thickness of the release agent layer of the release layer 34 is not particularly limited. When the release agent layer is formed by being coated with a solution containing the release agent, the thickness of the release agent layer is preferably in a range from 0.01 $\mu$m to 2.0 $\mu$m, more preferably in a range from 0.03 $\mu$m to 1.0 $\mu$m.
When the plastic film is used as the release base, the thickness of the plastic film is preferably in a range from 3 $\mu$m to 150 $\mu$m, more preferably in a range from 5 $\mu$m to 100 $\mu$m.

Fourth Exemplary Embodiment

Next, a fourth exemplary embodiment of the invention will be described with reference to the attached drawings.
It should be noted that the fourth exemplary embodiment will be described as an embodiment in which a sheet-shaped conductive member 10C is used as a heat-generating body.
The sheet-shaped conductive member 10C according to the fourth exemplary embodiment includes a pseudo sheet structure with a low sheet resistance, and is suitable to be applied to a heat-generating body. In other words, a heat-generating body including the sheet-shaped conductive member 10C according to the fourth exemplary embodiment (a heat-generating body according to the fourth exemplary embodiment) can reduce the voltage applied thereto.

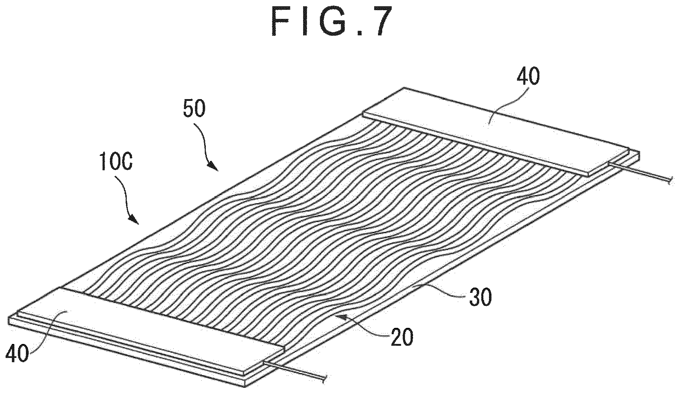

Meanwhile, as shown in Fig. 7, a heat-generating device 50 according to the fourth exemplary embodiment includes, for instance, the heat-generating body according to the fourth exemplary embodiment (the heat-generating body including the sheet-shaped conductive member 10C according to the fourth exemplary embodiment) and electrodes 40 through which power is supplied to the heat-generating body (pseudo sheet structure 20 thereof). The electrodes 40 are made of, for instance, a metal material and electrically connected to ends of the pseudo sheet structure 20 of the sheet-shaped conductive member 10C. The electrodes 40 are bonded to the pseudo sheet structure 20 by a known method such as soldering so that power can be supplied to each of the conductive linear bodies 22 of the pseudo sheet structure 20.

Examples of usage of the sheet-shaped conductive member 10C as a heat-generating body include a defogger and deicer. In this case, examples of the adherend thereon include a mirror in a bathroom or the like, windows of transport devices (e.g., an automobile, train, ship, airplane) or a building, an eyewear, a lighting surface of traffic signals and traffic signs. Further, the sheet-shaped conductive member of the invention also can be used as a flat cable for wiring an electric signal.

Modification(s) of Exemplary Embodiment(s)

The scope of the invention is not limited to the above exemplary embodiments but includes modifications and improvements as long as the modifications and improvements are compatible with the object of the invention.

For instance, in the above exemplary embodiments, the pseudo sheet structure 20 is a single layer, but not limited thereto. For instance, the sheet-shaped conductive member 10 may be a sheet on which a plurality of pseudo sheet structures 20 are arranged in a surface direction of the sheet (a direction along the surface of the sheet). In a plan view of the sheet-shaped conductive member 10, the plurality of pseudo sheet structures 20 may be arranged so that the conductive linear bodies 22 of one of the plurality of pseudo sheet structures 20 are aligned in parallel to or arranged to intersect with the conductive linear bodies 22 of another of the plurality of pseudo sheet structures 20.

Example(s)

The invention will be described in more detail with reference to Example(s). However, each of the Example(s) does not limit the scope of the invention.

Example 1

A 100-$\mu$m-thick polyurethane resin film was used as a base, and provided with an 18-$\mu$m-thick acrylic sticky agent layer (pressure-sensitive adhesive agent layer) thereon as an adhesive agent layer to prepare a sticky sheet.

Tungsten wires (25 $\mu$m in diameter, manufactured by TOKUSAI TungMoly Co., Ltd., trade name: TGW-CS) were prepared as conductive linear bodies.

Next, the sticky sheet was wound on a drum member having a rubber outer circumferential surface so that the surface of the pressure-sensitive adhesive agent layer faced outwards and did not become wrinkled, and both ends of the sticky sheet in the circumferential direction of the drum member were fixed by a double-sided tape. Six bobbins around which the wires were wound were prepared and attached on the surface of the pressure-sensitive adhesive agent layer of the sticky sheet located at one of the ends of the drum member. The wires were fed from the respective bobbins and simultaneously wound on the drum member. The drum member was gradually moved in a direction parallel to a drum axis of the drum member, so that the wires were wound on the drum member at equal intervals in a waveform. Accordingly, a plurality of the wires were provided on the surface of the pressure-sensitive adhesive agent layer of the sticky sheet so that adjacent ones of the plurality of the wires were spaced from each other at a predetermined distance, thereby forming a pseudo sheet structure including wires. At this time, the drum member was moved while being vibrated, thereby preparing the wound wires to be in a waveform. The wires were provided at equal intervals. The amplitude A of the wires, the wavelength $\lambda$ of the wires (pitch of the wavelength), the interval L between the wires in the direction orthogonal to the axial direction and the minimum interval S between the wires were measured with the use of a digital microscope ("VHX-6000" manufactured by Keyence Corporation). The values of $2A/\lambda$, the values of $\{(2A-D-L)/(2A-D)\}$ and the values of minimum interval S between the wires are shown in Table 1 below.

Next, a release film (trade name: SP-381130 (manufactured by LINTEC Corporation)) serving as a release layer was attached on the surface of the pseudo sheet structure (the surface where the adhesive agent layer was exposed between the wires) of the sticky sheet, on which the pseudo sheet structure was provided. Subsequently, the sticky sheet was cut in parallel to the drum axis together with the pseudo sheet structure and the release film to obtain a sheet-shaped conductive member.

Examples 2 and 3

A sheet-shaped conductive member was obtained in a similar manner to Example 1 except that wires were wound so that the value of $2A/\lambda$, the value of $\{(2A-D-L)/(2A-D)\}$ and the value of minimum interval S between the wires were set as shown in Table 1 below.

Comparatives 1 and 2

A sheet-shaped conductive member was obtained in a similar manner to Example 1 except that wires were wound so that the value of $2A/\lambda$, the value of $\{(2A-D-L)/(2A-D)\}$ and the value of minimum interval S between the wires were set as shown in Table 1 below.

Measurement of Percentage of Stretching

The obtained sheet-shaped conductive members were each measured for a percentage of stretching in the axial direction of the wires. The obtained results are shown in Table 1.
Specifically, copper foils were attached at both ends of the 10-cm-long sheet-shaped conductive member with the use of an electric slider("EZS4R-E045-AZAAD-2" manufactured by Oriental Motor Co., Ltd.) and were used as electrodes for measurement. The sheet-shaped conductive member was disposed on the electric slider and terminals of a digital multimeter, PC7000 manufactured by Sanwa Electric Instrument Co., Ltd., were disposed on the electrodes for measurement. Subsequently, the electric slider is extended, thereby determining a position immediately before the wires were broken.
The percentage of stretching is calculated as follows.

$$\text{Percentage of stretching (\%)} = \{(\text{length of sheet-shaped conductive member immediately before wires are broken}) - (\text{length of sheet-shaped conductive member before extension})\} / (\text{length of sheet-shaped conductive member before extension}) \times 100$$

Determination of Abnormal Heat Generation

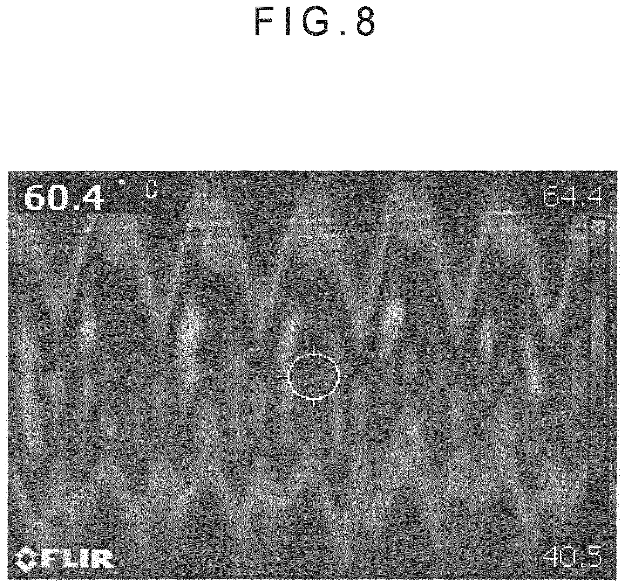

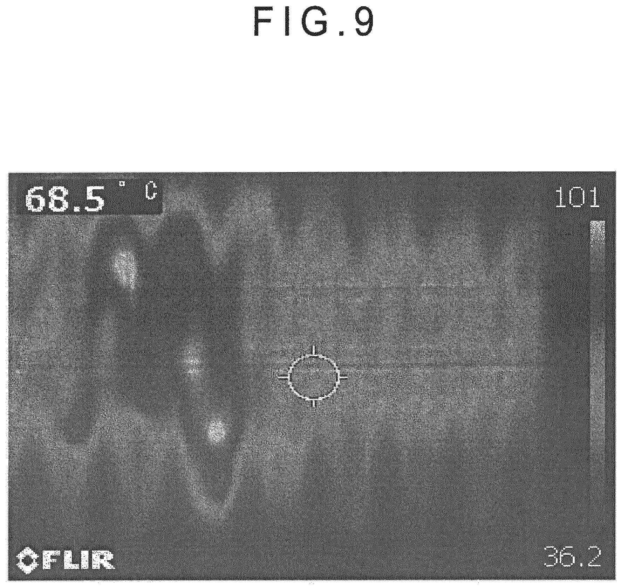

The obtained sheet-shaped conductive members were each measured for a temperature distribution. The obtained measurement results were confirmed whether abnormal heat generation was caused. The obtained results are shown in Table 1. The measurement results of a temperature distribution in the sheet-shaped conductive member obtained in Example 1 are shown in Fig. 8. The measurement results of a temperature distribution in the sheet-shaped conductive member obtained in Example 2 are shown in Fig. 9.
Specifically, the temperature distribution of each of the sheet-shaped conductive members was first measured with the use of an infrared thermography ("FLIR C2" manufactured by FLIR Systems, Inc.). The temperature distribution of the sheet-shaped conductive member was checked and determined as "present" if abnormal heat generation was confirmed. It should be noted that if the sheet-shaped conductive member has a portion where a difference between a maximum temperature and a minimum temperature exceeds 20 degrees C in the measured temperature distribution between the wires, it is determined that abnormal heat generation is "present". In contrast, a case where no abnormal heat generation was confirmed was determined as "absent".

Determination of Signal Crosstalk

The obtained sheet-shaped conductive members were each checked for presence or absence of signal crosstalk. The obtained results are shown in Table 1.
Specifically, each of the sheet-shaped conductive members was first stretched so that the percentage of stretching was 8% in the axial direction of wires to obtain a sample. Conduction between adjacent ones of the wires in the sample was checked with the use of a digital multimeter ("PC7000" manufactured by Sanwa Electric Instrument Co., Ltd.). A case where conduction was confirmed between the adjacent ones of the wires was determined as "present". In contrast, a case where no conduction was confirmed between the adjacent ones of the wires was determined as "absent".

Table 1

| | Conductive Linear Body | | | Sheet-Shaped Conductive Member | | |
|---|---|---|---|---|---|---|
| | Minimun Interval S (mm) | 2A/λ | (2A-D-L)/(2A-D) | Percentage of Stretching (%) | Presence or Absence of Abnormal Heating | Presence or Absence of Signal Crosstalk |
| Example 1 | 50 | 5.00 | 0.75 | 120 | Absent | Absent |
| Example 2 | 400 | 0.50 | 0.58 | 75 | Absent | Absent |
| Example 3 | 2200 | 0.20 | -0.27 | 10 | Absent | Absent |
| Comparative 1 | 4500 | 0.14 | -6.41 | 5 | Absent | Absent |
| Comparative 2 | ≤ 10 | 5.00 | 0.87 | 100 | Present | Present |

EXPLANATION OF CODE(S)

10, 10A, 10B, 10C... sheet-shaped conductive member, 20...pseudo sheet structure, 22... conductive linear body

**Claims**

1.  A sheet-shaped conductive member comprising a pseudo sheet structure having a plurality of conductive linear bodies arranged to be spaced from each other, wherein
    the sheet-shaped conductive member has stretchability, and
    a minimum interval between the conductive linear bodies is 50 μm or more.

2.  The sheet-shaped conductive member according to claim 1, wherein
    a percentage of stretching in an axial direction of the conductive linear bodies of the sheet-shaped conductive member is 8% or more.

3.  The sheet-shaped conductive member according to claim 1 or 2, wherein
    the conductive linear bodies are in a waveform in a plan view of the sheet-shaped conductive member.

4.  The sheet-shaped conductive member according to claim 3, wherein
    the sheet-shaped conductive member satisfies both formulae (F1) and (F2) below,

$$0.15 \leq 2A/\lambda \leq 5.0 \ldots (F1)$$

$$\{(2A - D - L)/(2A - D)\} \leq 0.8 \ldots (F2),$$

    where an amplitude of each of the conductive linear bodies, a wavelength of each of the conductive linear bodies, an interval between adjacent ones of the conductive linear bodies in a direction orthogonal to the axial direction and a diameter of each of the conductive linear bodies are defined as A, λ, L and D, respectively.

5.  The sheet-shaped conductive member according to any one of claims 1 to 4, wherein
    the conductive linear bodies are at least one type of linear bodies selected from the group consisting of linear bodies comprising a metal wire, linear bodies comprising carbon nanotubes and linear bodies in a form of conductively coated strings.

6.  The sheet-shaped conductive member according to any one of claims 1 to 5, wherein
    the sheet-shaped conductive member is used as a heat-generating body.

# FIG. 1

# FIG.2

# FIG.3

# FIG.4

# FIG.5

10A

22

20

30

32

# FIG.6

# FIG.7

# FIG.8

# FIG.9

# EP 3 846 583 A1

## INTERNATIONAL SEARCH REPORT

International application No.

PCT/JP2019/034320

### A. CLASSIFICATION OF SUBJECT MATTER

Int.Cl. H05B3/20(2006.01)i, B32B5/04(2006.01)i, B32B5/08(2006.01)i

According to International Patent Classification (IPC) or to both national classification and IPC

### B. FIELDS SEARCHED

Minimum documentation searched (classification system followed by classification symbols)

Int.Cl. H05B3/20, B32B5/04, B32B5/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2018/097321 A1 (LINTEC OF AMERICA, INC.) 31 May 2018, paragraphs [0005]–[0006], [0016]–[0047], [0106]–[0111], [0139]–[0141], fig. 1-2, 4 & US 2019/0297677 A1 paragraphs [0011]–[0013], [0042]–[0089], [0186]–[0192], [0231]–[0236], fig. 1-2, 4 & EP 3547795 A1 | 1–4<br>5–6 |

☒ Further documents are listed in the continuation of Box C.　　☐　See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 November 2019 (19.11.2019) | 26 November 2019 (26.11.2019) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

## INTERNATIONAL SEARCH REPORT

International application No.

PCT/JP2019/034320

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2016-072103 A (SWCC SHOWA DEVICE TECHNOLOGY CO., LTD.) 09 May 2016, paragraphs [0013]-[0014], [0020], [0036], fig. 1-7 & WO 2016/051772 A1 | 1-3<br>5-6 |
| Y | JP 2018-039226 A (LINTEC CORP.) 15 March 2018, paragraph [0070] (Family: none) | 5-6 |
| A | JP 2009-218173 A (NIPPON SHEET GLASS CO., LTD.) 24 September 2009, entire text, all drawings (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8222359 A
- WO 2018097321 A
- US 20130251619 A
- JP 2012126635 A